# EUROPÄISCHE PATENTSCHRIFT

(11) **EP 1 020 961 B1**
(45) Veröffentlichungstag und Bekanntmachung des Hinweises auf die Patenterteilung: **14.03.2007**
(21) Anmeldenummer: 00100013.2
(22) Anmeldetag: 03.01.2000
(51) Int. Cl.: H01R 13/627, G02B 6/38

(54) **Steckverbindung**
Connection
Connexion

(30) Priorität: 15.01.1999 DE 19901448
(43) Veröffentlichungstag der Anmeldung: 19.07.2000
(73) Patentinhaber: TYCO Electronics Logistics AG, 9323 Steinach / SG (CH)
(72) Erfinder: Birnbaum, Roland, 73433 Aalen (DE); Heimüller, Hans-Jost, 67373 Dudenhofen (DE); Merkle, Klaus, 75015 Bretten (DE); Buck, Carsten, 76189 Karlsruhe (DE)
(74) Vertreter: Klunker . Schmitt-Nilson . Hirsch

(56) Entgegenhaltungen:
- EP-A- 0 621 658
- EP-A- 0 837 347
- EP-A- 0 935 147
- EP-A- 0 967 500
- US-A- 4 993 803
- US-A- 5 277 608

## Beschreibung

Die Erfindung betrifft eine Steckverbindung bestehend aus zwei Steckteilen, nämlich einem Stecker und einem Gegenstekker, welche zur Herstellung der Steckverbindung ineinander geschoben werden und in dieser gegenseitigen Verbindung miteinander lösbar verrastet sind und bei der die Rastmittel am einen der beiden Steckteile aus einem an dessen Gehäuse vorgesehenen federnden Rasthebel mit einer Rast und am anderen der beiden Steckteile aus einer an dessen Gehäuse vorgesehenen Gegenrast bestehen, wobei der Rasthebel und das zugehörige Steckteil aus Kunststoff ausgebildet sind.

Eine derartige Steckverbindung ist zum Beispiel aus der EP 0 418 790 B1 bekannt. Der federnde Rasthebel ist bei dieser Steckverbindung an der Unterseite des Buchsensteckers angeordnet und an der Außenseite mit einem Rastvorsprung versehen. Der Gegenstecker umschließt den Buchsenstecker kastenförmig, wobei im zusammengesteckten Zustand der Rastvorsprung in eine entsprechende Ausnehmung im Gegenstecker eingreift. Beim Zusammenstecken federt der Rasthebel elastisch ein und springt im zusammengesteckten Zustand, wenn der Rastvorsprung in die Ausnehmung eingreift, wieder in seine ursprüngliche Lage zurück.

Eine weitere derartige Steckverbindung ist auch aus der GB 2 180 657 A bekannt.

Beide Steckverbindungen dienen zur Verbindung elektrischer Leiter. Ein axiales Spiel zwischen Stecker und Gegenstecker aufgrund von Fertigungstoleranzen hat hier keine negativen Auswirkungen, da hiervon die elektrische Verbindung nicht beeinträchtigt wird.

Wird jedoch eine derartige Steckverbindung für die Verbindung zweier Lichtwellenleiter bzw. eines Lichtwellenleiters mit einem Optokoppler verwendet, so entstehen starke Einkopplungsverluste durch das axiale Spiel zwischen Stecker und Gegenstecker. Da sowohl der Stecker als auch der Gegenstecker in der Regel aus Kunststoff hergestellt wird, ist es nahezu unmöglich, die Fertigungstoleranzen so gering zu halten, daß die Einkopplungsverluste vollkommen ausgeräumt sind. Desweiteren würden enge Fertigungstoleranzen das Zusammenfügen von Stecker und Gegenstecker erheblich erschweren.

Die EP 0 621 658 A betrifft eine Steckverbindungsanordnung gemäß dem Oberbegriff von Anspruch 1, bei der ein Steckteil über ein Rastmittel mit einem Gegenstecker verrastet wird, wobei das Rastmittel durch einen Rasthebel gebildet ist, der beim Einführen des einen Steckteils in den Gegenstecker nach unten gebogen wird und beim Einschnappen in die Verrastungsposition infolge seiner Federkraft wieder nach oben ausgelenkt wird.

Der Erfindung liegt daher die Aufgabe zugrunde, eine Steckverbindung aufzuzeigen, welche einfach und kostengünstig hergestellt werden kann und durch welche ein axiales Spiel zwischen Stecker und Gegenstecker vermieden wird.

Die Aufgabe wird erfindungsgemäß durch die Merkmale des Anspruchs 1 gelöst.

Dadurch, daß über den federnden Rasthebel die beiden Steckteile permanent quer zur Steckachse gegeneinander gedrückt werden, ist die Steckverbindung in axialer Richtung spielfrei.

Über das zusätzliche Federmittel, welches den Kunststoffrasthebel in seiner Federkraft unterstützt, ist die axiale Spielfreiheit auch dann noch gewährleistet, wenn sich der Kunststoff bereits plastisch verformt hat bzw. die Federkraft des Kunststoffrasthebels nachläßt.

Für eine hohe Lebensdauer ist es günstig, das weitere Federmittel als Metallfeder auszubilden.

In einer bevorzugten Ausführungsvariante ist zwischen dem Rasthebel und dem Gehäuse des Steckteiles, welches mit dem Rasthebel versehen ist, ein Spalt ausgebildet, in welchem eine Plattfeder aus Metall angeordnet ist.

Zur Fixierung der Plattfeder sind am Rasthebel vorzugsweise Ausnehmungen vorgesehen, in welche entsprechende Teile der Plattfeder ragen.

Ist der Rasthebel über eine größere Breite ausgebildet, so werden bevorzugt zwei oder mehrere Federmittel verwendet.

Der Rasthebel ist günstigerweise an seinem freien Ende mit einem schwellenförmigen Rastkopf versehen, welcher quer zur Schieberichtung der ineinanderzuschiebenden Steckteile eine vordere und/oder eine hinterer Gleitfläche aufweist, welche im ineinandergeschobenen Zustand der Steckteile an der Innenkante einer Rastkopf-Aufnahmeöffnung am anderen der beiden Steckteile anliegt. Durch die von der Oberseite des Rasthebels schräg abstehende vordere bzw. hintere Gleitfläche werden Fertigungsungenauigkeiten kompensiert, da sich bei unterschiedlichen Maßen lediglich ein unterschiedlicher Berührungspunkt zwischen Gleitfläche und der Innenkante der Rastkopf-Aufnahmeöffnung ergibt.

Weitere vorteilhafte Ausgestaltungen ergeben sich aus den Unteransprüchen.

Nachfolgend wird die Erfindung anhand zweier in den Zeichnungen dargestellter Ausführungsbeispiele näher erläutert. In den Zeichnungen zeigt
- Figur 1: ein erstes Ausführungsbeispiel der Steckverbindung mit ineinandergeschobenem Stecker und Gegenstecker im Querschnitt,
- Figur 1a: einen Ausschnitt aus Figur 1 in vergrößertem Maßstab,
- Figur 2 und 3: den Stecker der zweiten Ausführungsform in perspektivischer Ansicht,
- Figur 4: eine Frontalansicht des Steckers gemäß Figur 2 und 3 im eingesteckten Zustand, wobei der Gegenstecker als Stiftleiste mit mehreren Stekkeraufnahmen ausgeführt ist und
- Figur 5: den Schnitt A - A gemäß Figur 4.

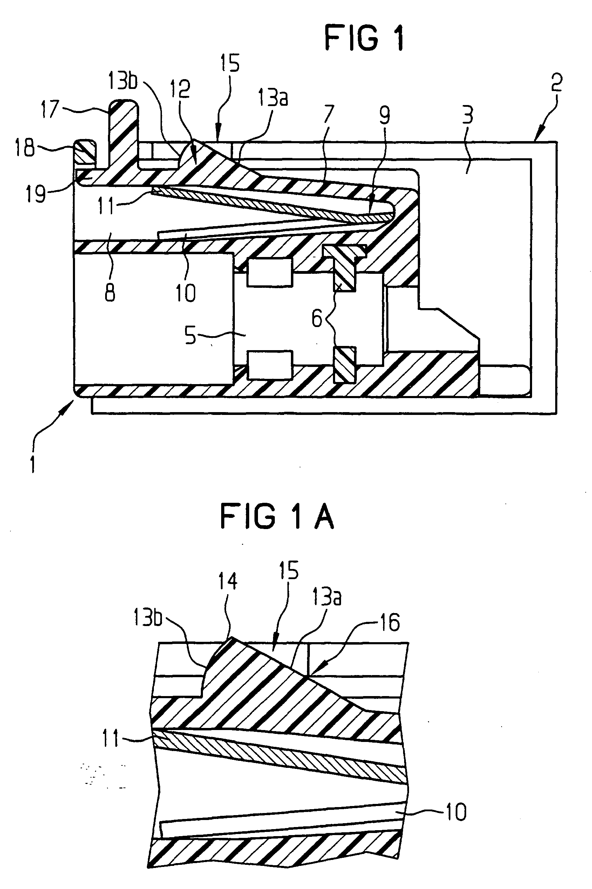

In Figur 1 ist ein erstes Ausführungsbeispiel der erfindungsgemäßen Steckverbindung im Querschnitt dargestellt. Die Steckverbindung besteht aus einem Stecker 1 und einem Gegenstecker 2, welcher einen kastenförmigen Aufnahmeschacht 3 aufweist, in den der Stecker 1 zur Herstellung der Steckverbindung eingeschoben wird. Im Stecker 1 ist ein Kanal 5 zur Aufnahme eines Lichtwellenleiters ausgebildet. Der Kanal 5 erstreckt sich in Steckrichtung durch den ganzen Stecker 1 und ist an der Innenwandung mit nicht dargestellten Primärverriegelungsmitteln sowie mit Mitteln 6 zur Zweitverriegelung des Lichtwellenleiters versehen. An der Oberseite des Steckers 1 ist ein Rasthebel 7 ausgebildet, welcher auf der einen Seite einstückig mit dem Stecker 1 verbunden ist und auf der anderen Seite vom Stecker 1 so beabstandet ist, daß sich zwischen dem Rasthebel 7 und dem Stecker 1 ein Spalt 8 ergibt. Der Rasthebel 7 sowie das Stecker 1 sind einstückig aus Kunststoff ausgebildet, wobei dieser so gewählt ist, daß sich eine elastisch federnde Verbindung zwischen Rasthebel 7 und Stecker 1 ergibt. Im Spalt 8 zwischen dem Rasthebel 7 und dem Stecker 1 ist ein weiteres Federmittel 9 vorgesehen, welches die Federkraft des Rasthebels 7 zusätzlich unterstützt. Durch das zusätzliche Federmittel 9 wird gewährleistet, daß auch bei einer Ermüdung des Kunststoffes an der Verbindungsstelle zwischen dem Rasthebel 7 und dem Stecker 1 noch eine ausreichende Federkraft vorhanden ist, welche den Rasthebel 7 nach außen drückt. In dem dargestellten Ausführungsbeispiel ist das Federmittel 9 als Plattfeder aus Metall ausgebildet. Die Plattfeder besteht aus einer im wesentlichen rechteckigen Grundfläche 10, aus welcher in der Mitte ein Schenkel 11 nach oben abgebogen ist. Die Grundfläche 10 stützt sich somit an der Oberfläche des Gehäuses 4 und der Federschenkel 11 an der Unterseite des Rasthebels 7 ab.

An der Außenseite des Rasthebels 7 ist dieser an seinem freien Ende mit einem schwellenförmigen Rastkopf 12 versehen, welcher aus einer vorderen Gleitfläche 13a und einer hinteren Gleitfläche 13b besteht, welche quer zur Einschubrichtung aneinanderstoßen. An der Kontaktlinie zwischen der vorderen Gleitfläche 13a und der hinteren Gleitfläche 13b ist die hintere Gleitfläche 13b zur vorderen Gleitfläche 13a hin leicht abgerundet, so daß sich eine Gleitkuppe 14 ergibt (siehe Figur 1a). Am Gegenstecker 2 ist als Gegenrast eine Rastkopf-Aufnahmeöffnung 15 ausgebildet, in welche der schwellenförmige Rastkopf 12 im eingeschobenen Zustand des Steckers 1 einrastet.

Die vordere Gleitfläche 13a weist einen wesentlich stumpferen Winkel zur Längsachse des Rasthebels 7 auf, als die hintere Gleitfläche 13b. Im eingesteckten Zustand liegt die vordere Gleitfläche 13a an der Innenkante 16 der Rastkopf-Aufnahmeöffnung 15 an.

Je nach dem wie der Stecker 1 bzw. der Gegenstecker 2 innerhalb ihrer Fertigungstoleranzen ausfallen, ergibt sich eine unterschiedliche Kontaktlinie zwischen der Innenkante 16 der Rastkopf-Aufnahmeöffnung 15 und der Gleitfläche 13a.

An dem freien Ende des Rasthebels 7 ist außerhalb des schwellenförmigen Rastkopfes 12 ein senkrecht nach außen abstehender Steg 17 angeordnet. Dieser steht im zusammengesteckten Zustand der beiden Steckteile über die Außenseite des Gegensteckers 2 vor. Zum Lösen der Steckverbindung wird der Steg 17 niedergedrückt, wodurch sich der Rastkopf 12 aus der Rastkopf-Aufnahmeöffnung 15 absenkt und somit der Stecker 1 aus dem Gegenstecker 2 gezogen werden kann.

An dem Stecker 1 ist ein Anschlag 18 vorgesehen, welcher die Bewegung des freien Endes 19 des Rasthebels 7 im ausgefederten Zustand beschränkt, so daß das freie Ende 19 des Rasthebels 7 im herausgezogenen Zustand des Steckers 1 am Anschlag 18 anliegt.

Wird der Stecker 1 in den Gegenstecker 2 eingeschoben, wird der Rasthebel 7 durch den schwellenförmigen Rastkopf 12 entgegen der Federkraft des Rasthebels und der des zusätzlichen Federmittels 9 niedergedrückt, bis der Rastkopf 12 in die Rastkopf-Aufnahmeöffnung 15 einschnappt. In diesem ineinandergeschobenen Zustand federt jedoch der Rasthebel nicht wieder vollkommen in seine ursprüngliche Lage aus, so daß ein gewisser Abstand zwischen dem Anschlag 18 und der Oberseite des freien Endes 19 des Rasthebels 7 verbleibt.

Durch die Federkraft des Rasthebels 7 sowie des zusätzlichen Federmittels 9 wird der Stecker 1 mit seiner Unterseite gegen den Grund des Gegensteckers 2 gepreßt. Ein axiales Spiel zwischen Stecker und Gegenstecker ist somit ausgeräumt. Insbesondere bei Lichtwellenleitern ist dies von großer Bedeutung, da hierdurch Einkopplungsverluste zwischen einem Lichtwellenleiter im Stecker und im Gegenstecker bzw. zwischen einem Lichtwellenleiter und einem Optokoppler minimiert bzw. völlig ausgeräumt werden.

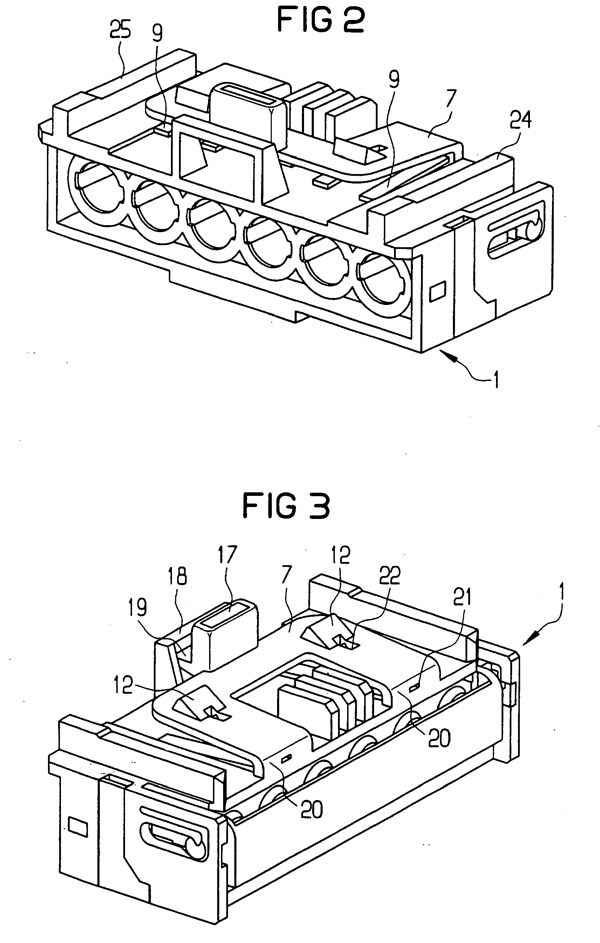

In den Figuren 2 bis 5 ist ein zweites Ausführungsbeispiel der Erfindung dargestellt. Soweit die Merkmale mit denjenigen der ersten Ausführungsform übereinstimmen, werden die gleichen Bezugszeichen verwendet.

Die Figuren 2 und 3 zeigen den Stecker 1 der zweiten Ausführungsform in einer perspektivischen Ansicht von vorne (Figur 2) sowie von hinten (Figur 3). Bei diesem Stecker handelt es sich um einen 6-poligen Buchsenstecker für Lichtwellenleiter. Der wesentliche Unterschied zur Ausführungsform gemäß Figur 1 besteht darin, daß pro Rasthebel 7 zwei Federmittel 9 vorgesehen sind. Der Rasthebel 7 ist von oben gesehen U-förmig ausgebildet ist und an den Enden des U über zwei Verbindungsstellen 20 mit dem Stecker 1 verbunden ist. Zwischen jedem Schenkel des U-förmigen Rasthebels 7 und dem Stecker 1 ist jeweils ein Federmittel 9 in Form einer Plattfeder aus Metall, wie sie in Figur 1 beschrieben wurde, vorgesehen. Oberhalb der Federmittel 9 ist an jedem Schenkel des U-förmigen Rasthebels 7 ein schwellenförmiger Rastkopf 12 mit einer vorderen Gleitfläche 13a und einer hinteren Gleitfläche 13b, ebenso wie im Ausführungsbeispiel gemäß Figur 1, ausgebildet. Zum Niederdrücken des Rasthebels 7 ist an der Basis des Rasthebels, d.h. von oben gesehen zwischen den beiden Schenkeln ein Steg 17 angeordnet. In der Breite des Steges 17 weist der Rasthebels 7 ein in Verlängerung des Rasthebels 7 nach außen überstehendes freies Ende 19 auf, welches im ausgefederten Zustand des Rasthebels 7 an einem Anschlag 18 am Stecker 1 anliegt.

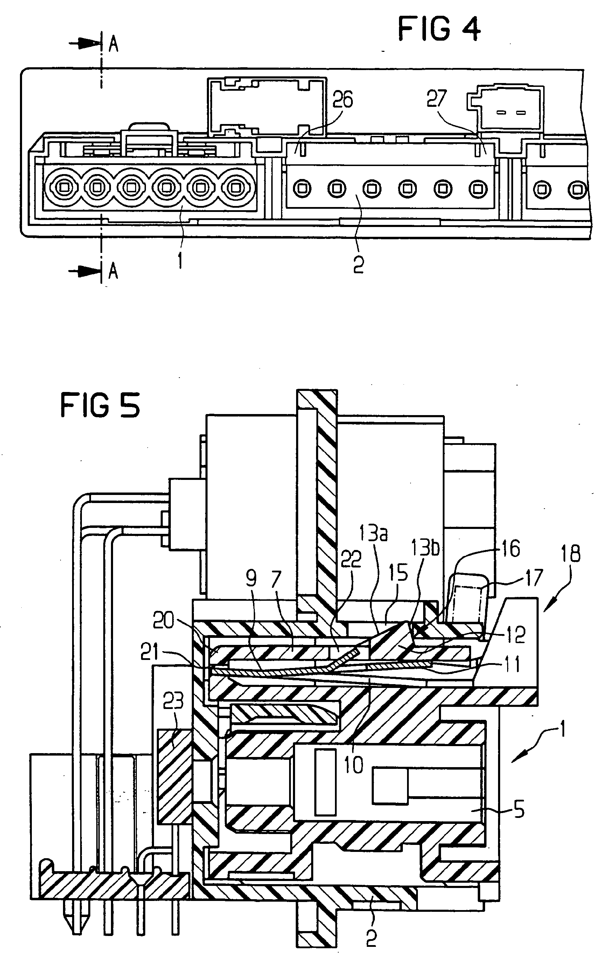

Figur 4 zeigt die Frontalansicht einer Stiftleiste, in deren linkem Aufnahmeschacht 3 ein Buchsenstecker gemäß Figuren 2 und 3 eingesteckt ist. Die Stiftleiste stellt somit den Gegenstecker 2 dar, wobei jeweils pro Aufnahmeschacht 3 ein Stecker 1 aufgenommen werden kann.

Figur 5 zeigt den Schnittverlauf A - A gemäß Figur 4. Der Stecker 1 ist vollkommen in die Stiftleiste 2 eingeschoben und wird durch die Federkraft des Rasthakens 7 sowie durch die beiden Federmittel 9 gegen den Stiftleistengrund gepreßt.

Zur Fixierung der als Plattfedern ausgebildeten Federmittel 9 sind an den Verbindungsstellen 20 zwischen dem Rasthebel 7 und dem Stecker 1 Ausnehmungen 21 sowie oberhalb des Federschenkels 11 der Plattfeder im Rasthebel 7 jeweils Ausnehmungen 22 vorgesehen, in welche entsprechende Teile der Plattfeder ragen.

Bei dieser Ausführungsform wird die hintere Gleitfläche 13b des Rastkopfes 12 gegen die Innenkante 16 der Rastkopf-Aufnahmeöffnung 15 gepreßt. Der Rasthebel 7 dient somit zum einen zur Verrastung der Steckverbindung sowie zur spielfreien Festlegung des Steckers 1 in der Stiftleiste 2.

Die Kanäle 5 zur Aufnahme der Lichtwellenleiter im Stecker 1 sind somit exakt zu dem Optokoppler 23 an der Rückseite der Stiftleiste 2 ausgerichtet.

Zusätzlich sind zur axial spielfreien Festlegung an der Oberseite des Steckers 1 Führungsrippen 24,25 vorgesehen, (s. Figuren 2 und 3) welche in entsprechende Nuten 26 und 27 an der Stiftleiste 2 beim Zusammenschieben der Steckteile gleiten. Über diese Führungsrippen bzw. Nuten wird der Stecker 1 in horizontaler Richtung, das heißt horizontal zur Einsteckrichtung gemäß der Darstellung in Figur 4, festgelegt.

Ebenso ist es jedoch auch möglich, den Stecker 1 an einer Seitenwand mit einem Rasthebel und einem zusätzlichen Federmittel wie an der Oberseite zu versehen und hierdurch die axiale Festlegung in horizontaler Richtung (bezogen auf die Einsteckrichtung gemäß Figur 4) zu erzielen.

## Patentansprüche

1. Steckverbindung bestehend aus zwei Steckteilen, nämlich einem Stecker (1) und einem Gegenstecker (2), welche zur Herstellung der Steckverbindung ineinander geschoben werden und in dieser gegenseitigen Verbindung miteinander lösbar verrastet sind und
bei der die Rastmittel am einen der beiden Steckerteile aus einem an dessen Gehäuse vorgesehenen federnden Rasthebel (7) mit einer Rast und am anderen der beiden Steckerteile aus einer an dessen Gehäuse vorgesehenen Gegenrast bestehen, wobei der Rasthebel (7) und das zugehörige Steckteil aus Kunststoff ausgebildet sind, wobei im Zuge des Ineinanderschiebens der beiden Steckteile (1, 2) der Rasthebel (7) zuerst einfedert und im vollständig zusammengesteckten Zustand nicht wieder vollkommen in seine ursprüngliche Lage ausfedert, und wobei ein weiteres Federmittel (9) vorgesehen ist, welches die Federkraft des Rasthebels (7) unterstützt,
**dadurch gekennzeichnet, dass**
der Rasthebel (7) seine Federkraft quer zur Steckachse die Steckteile (1, 2) permanent quer zur Steckachse gegeneinander drückt, so dass die Steckverbindung in axialer Richtung spielfrei ist, wobei der Rasthebel (7) am Gehäuse des einen der beiden Steckerteile an seinem freien Ende mit einem schwellenförmigen Rastkopf (12) versehen ist und der schwellenförmige Rastkopf (12) quer zur Schieberichtung der ineinanderzuschiebenden Steckteile eine vordere und/oder eine hintere Gleitfläche (13a, 13b) aufweist und die Gegenrast am Gehäuse des anderen der beiden Steckerteile eine Rastkopf-Aufnahmeöffnung (15) ist und im ineinandergeschobenen Zustand die vordere (13a) und/oder die hintere (1 3b) Gleitfläche an der Innenkante (16) der Rastkopf-Aufnahmeöffnung (15) anliegt.

2. Steckverbindung nach Anspruch 1,
**dadurch gekennzeichnet, dass**
das weitere Federmittel (9) als Metallfeder ausgebildet ist.

3. Steckverbindung nach Anspruch 2,
**dadurch gekennzeichnet, dass**
zwischen dem Rasthebel (7) und dem Gehäuse des Steckteiles, welches mit dem Rasthebel versehen ist, ein Spalt (8) ausgebildet ist, in welchem das Federmittel (9) angeordnet ist.

4. Steckverbindung nach Anspruch 2,
**dadurch gekennzeichnet, dass**
die Metallfeder als Plattfeder ausgebildet ist und der Rasthebel (7) zwei Ausnehmungen (21, 22) aufweist, in welche Teile der Plattfeder ragen und diese somit festlegen.

5. Steckverbindung nach einem der Ansprüche 1 bis 4,
**dadurch gekennzeichnet, dass**
pro Rasthebel (7) zwei oder mehrere Federmittel (9) vorgesehen sind.

6. Steckverbindung nach einem der Ansprüche 1 bis 5,
**dadurch gekennzeichnet, dass**
diese zur Verbindung von Lichtwellenleitern verwendet wird.

7. Steckverbindung nach einem der Ansprüche 1 bis 6,
**dadurch gekennzeichnet, dass**
im Stecker ein Lichtwellenleiter und im Gegenstecker ebenso ein Lichtwellenleiter oder ein Optokoppler aufgenommen ist.

8. Steckverbindung nach einem der Ansprüche 1 bis 7,
**dadurch gekennzeichnet, dass**
die Rastmittel aus zwei oder mehreren Rasthebeln (7) und entsprechenden Gegenrasten bestehen.

## Claims

1. A plug-in connection consisting of two connector parts, namely a plug connector (1) and a mating connector (2), which are pushed one into the other to produce the plug-in connection and are latched detachably together in this mutual connection and
in which the latching means on the one of the two connector parts consist of a resilient latching lever (7), provided on the housing thereof, with a catch and on the other of the two connector parts of a mating catch provided on the housing thereof, the latching lever (7) and the associated connector part being made of plastics material, wherein, when pushing the two connector parts (1, 2) into one another, the latching lever initially gives and in the completely plugged-together state does not spring entirely back into its original position, and a further spring means (9) is provided, which assists the spring force of the latching lever (7),
**characterised in that** the latching lever (7) forces the connector parts (1, 2) permanently towards one another transverse to the plug-in axis through its spring force transverse to the plug-in axis, such that the plug-in connection is free of play in the axial direction, wherein the latching lever (7) on the housing of the one of the two connector parts is provided at its free end with a threshold-shaped latching head (12) and the threshold-shaped latching head (12) comprises a front and/or a rear sliding surface (13a, 13b) transverse to the insertion direction of the connector parts to be pushed into one another and the mating catch on the housing of the other of the two connector parts is a latching head receiving opening (15) and, when pushed into one another, the front (13a) and/or rear (13b) sliding surface rests against the inner edge (16) of the latching head receiving opening (15).

2. A plug-in connection according to claim 1, **characterised in that** the further spring means (9) takes the form of a metal spring.

3. A plug-in connection according to claim 2, **characterised in that** a gap (8) is formed between the latching lever (7) and the housing of the connector part provided with the latching lever, in which gap (8) the spring means (9) is arranged.

4. A plug-in connection according to claim 2, **characterised in that** the metal spring takes the form of a blade spring and the latching lever (7) comprises two recesses (21, 22), into which parts of the blade spring project and thus fix it in place.

5. A plug-in connection according to any one of claims 1 to 4, **characterised in that** two or more spring means (9) are provided per latching lever (7).

6. A plug-in connection according to any one of claims 1 to 5, **characterised in that** it is used to connect optical waveguides.

7. A plug-in connection according to any one of claims 1 to 6, **characterised in that** an optical waveguide is accommodated in the plug connector, the mating connector likewise accommodating an optical waveguide or an optocoupler.

8. A plug-in connection according to any one of claims 1 to 7, **characterised in that** the latching means consist of two or more latching levers (7) and corresponding mating catches.

## Revendications

1. Connexion comprenant deux éléments de connexion, à savoir un connecteur (1) et un connecteur complémentaire (2), emboîtés l'un dans l'autre pour établir la connexion et pouvant être encliquetés de manière amovible dans cet état de connexion mutuelle ; et
les moyens d'encliquetage étant constitués sur l'un des deux éléments de connexion par un levier d'encliquetage élastique (7) agencé sur le boîtier correspondant, comportant un cliquet, et sur l'autre des deux éléments de connexion par un cliquet complémentaire agencé sur le boîtier correspondant, le levier d'encliquetage (7) et l'élément de connexion correspondant étant composés de plastique, le levier d'encliquetage (7) étant en premier lieu engagé de manière élastique lors de l'emboîtement et n'étant pas dégagé complètement et ramené dans sa position d'origine dans l'état complètement emboîté, un moyen de ressort additionnel (9) soutenant la force élastique du ressort d'encliquetage (7), **caractérisé en ce que**
le levier d'encliquetage (7) presse de manière permanente les éléments de connexion (1, 2) l'un contre l'autre, de manière transversale à l'axe de connexion, par l'intermédiaire de sa force élastique transversale à l'axe de connexion, de sorte que la connexion ne présente pas de jeu dans la direction axiale, le levier d'encliquetage (7) comportant sur le boîtier de l'un des deux éléments de connexion une tête d'encliquetage en forme de traverse(12) agencée au niveau de son extrémité libre, la tête d'encliquetage en forme de traverse (12) comportant une surface de glissement avant et/ou arrière (13a, 13b), transversale à la direction d'emboîtement des éléments de connexion devant être emboîtés, le cliquet complémentaire sur le boîtier de l'autre des deux éléments de connexion comportant une ouverture de réception de la tête d'encliquetage (15), la surface de glissement avant (13a) et/ou arrière (13b) reposant dans l'état emboîté sur le bord interne (16) de l'ouverture de réception de la tête d'encliquetage (15).

2. Connexion selon la revendication 1, **caractérisée en ce que** le moyen de ressort additionnel (9) est constitué par un ressort métallique.

3. Connexion selon la revendication 2, **caractérisée en ce qu'**une fente (8) dans laquelle est agencé le moyen de ressort (9) est formée entre le levier d'encliquetage (7) et le boîtier de l'élément de connexion comportant le levier d'encliquetage.

4. Connexion selon la revendication 2, **caractérisée en ce que** le ressort métallique a la forme d'un ressort plat, le levier d'encliquetage (7) comportant deux évidements (21, 22) dans lesquels débordent des parties du ressort plat , assurant ainsi la fixation correspondante.

5. Connexion selon l'une des revendications 1 à 4, **caractérisée en ce que** deux ou plusieurs moyens de ressort (9) sont prévus pour chaque levier d'encliquetage (7).

6. Connexion selon l'une des revendications 1 à 5, **caractérisée en ce qu'**elle est utilisée pour la connexion de guides d'ondes lumineuses.

7. Connexion selon l'une des revendications 1 à 6, **caractérisé en ce que** le connecteur reçoit un guide d'ondes lumineuses, le connecteur complémentaire recevant également un guide d'ondes lumineuses ou un coupleur optique.

8. Connexion selon l'une des revendications 1 à 7, **caractérisée en ce que** les moyens d'encliquetage sont constitués par deux ou plusieurs leviers d'encliquetage (7) et des cliquets complémentaires correspondants.
